(19) Europäisches Patentamt / European Patent Office / Office européen des brevets

(11) **EP 3 026 827 B1**

(12) **FASCICULE DE BREVET EUROPEEN**

(45) Date de publication et mention
de la délivrance du brevet:
**28.08.2019 Bulletin 2019/35**

(51) Int Cl.:
***H04B 7/185*** *(2006.01)*

(21) Numéro de dépôt: **15196728.8**

(22) Date de dépôt: **27.11.2015**

(54) **PROCÉDÉ ET SYSTÈME DE COMMUNICATION DANS UN RÉSEAU HYBRIDE SATELLITE/TERRESTRE**

KOMMUNIKATIONSVERFAHREN UND -SYSTEM IN EINEM SATELLITEN-/BODEN-HYBRIDNETZ

COMMUNICATION METHOD AND SYSTEM IN A SATELLITE/TERRESTRIAL HYBRID NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.11.2014 FR 1402709**

(43) Date de publication de la demande:
**01.06.2016 Bulletin 2016/22**

(73) Titulaire: **THALES**
**92400 Courbevoie (FR)**

(72) Inventeurs:
• **GADAT, Benjamin**
**31100 Toulouse (FR)**
• **VAN WAMBEKE, Nicolas**
**31100 Toulouse (FR)**
• **PEYROTTE, Christian**
**31100 Toulouse (FR)**

(74) Mandataire: **Priori, Enrico**
**Marks & Clerk France**
**Immeuble "Visium"**
**22, avenue Aristide Briand**
**94117 Arcueil Cedex (FR)**

(56) Documents cités:
**EP-A1- 2 615 749       WO-A1-01/05064
US-A1- 2004 196 798    US-A1- 2008 146 219
US-A1- 2008 175 155**

## Description

L'invention concerne le domaine des télécommunications, et plus particulièrement le domaine des télécommunications à destination d'un aéronef via une liaison satellite. Elle vise à proposer un procédé et un système de communication hybride dans lequel une liaison terrestre est utilisée conjointement à une liaison satellitaire, de manière à améliorer les performances de la transmission. Le procédé et système s'appliquent en particulier aux communications aéronautiques, mais peuvent également s'appliquer aux communications vers tout autre type de porteur en déplacement.

Les systèmes de communication aéronautiques reposent fréquemment sur une liaison satellitaire, entre un satellite et un aéronef car, lors de son déplacement, l'aéronef est en visibilité continue du satellite, ce qui n'est pas le cas avec les stations terrestres. Les liaisons satellitaires permettent également d'avoir une portée plus importante que les liaisons terrestres.

Aux abords de certains emplacements stratégiques, comme les zones urbaines ou les aéroports, il arrive néanmoins à l'aéronef d'être à portée d'une station terrestre.

La demande internationale WO 01/05064 A1 décrit un système permettant une communication entre deux équipements via une liaison satellitaire, dans laquelle l'équipement de destination est également en contact avec une station sol.

Le temps de latence de la liaison satellite, lié au temps de propagation depuis ou à destination des satellites, est plus important que celui des liaisons terrestres. Pour limiter l'impact de ce temps de latence sur la performance globale de la communication, il est nécessaire de mettre en oeuvre une liaison de données fiable, de manière à n'avoir recours que le moins souvent possible à des processus de retransmission du signal, comme les processus ARQ ou HARQ (termes anglais pour Automatic Repeat reQuest / Hybrid ARQ désignant une méthode de contrôle des erreurs pour la transmission de données).

Le canal de propagation aéronautique est soumis à de nombreux phénomènes détériorant la qualité de la liaison de données, comme en particulier l'effet Doppler liés aux déplacements de l'aéronef.

Les antennes utilisées sur un aéronef en déplacement sont généralement des antennes à tendance omnidirectionnelle, afin de s'affranchir de mécanismes de pointage d'antenne, et de simplifier l'intégration des antennes sur l'aéronef. Cependant, pour ce type d'antennes se pose le problème des multitrajets issus de réflexions sur le sol ou sur la carlingue, à l'origine d'interférences entre les symboles reçus.

Ainsi, en fonction de la position géographique de l'aéronef et de ses déplacements, le fonctionnement de la liaison de données satellitaire peut être fortement dégradé, entrainant le recours systématique à des processus de retransmission du signal.

Le canal de propagation entre l'aéronef et la station terrestre est lui aussi soumis à ces contraintes, mais il est différent du canal de propagation entre l'aéronef et la station satellitaire. La station terrestre étant plus proche de l'aéronef, et moins contrainte en termes de puissance d'émission, le bilan de liaison de la liaison terrestre sera plus avantageux que celui de la liaison satellitaire.

L'invention cherche donc à résoudre les problèmes de latence entrainés par la retransmission de données lorsque les conditions de propagation sont dégradées, en proposant un procédé de communication hybride terrestre/satellitaire.

Le standard DVB-SH (terme anglais pour Digital Video Broadcasting - Satellite Handheld désignant une norme de diffusion vidéo numérique par satellite à destination d'un récepteur portable) ou DVB-NGH (terme anglais pour Digital Video Broadcasting - Next Génération Handheld, évolution du standard DVB-SH), destiné à la diffusion de vidéos sur téléphone portable, propose une liaison de données hybride satellitaire/terrestre, mais ne décrit pas de processus spécifique de retransmission des paquets, car il se limite à la définition de la couche physique.

Il propose d'utiliser une forme d'onde basée sur une modulation OFDM (terme anglais pour Orthogonal Frequency Divison Multiplexing, ou multiplexage par répartition orthogonale en fréquence) et l'utilisation de turbo codes. L'émission d'un paquet de données est réalisée dans un même créneau temporel depuis un satellite et une station terrestre, l'ensemble des données étant recombinées au niveau du récepteur en utilisant une technique de MRC (terme anglais pour Maximum Radio Combining, ou combinaison à rapport maximal) afin d'améliorer le bilan de liaison. Cette mise en oeuvre nécessite une synchronisation entre le satellite et les stations terrestres, et n'est possible que du fait de l'utilisation d'une modulation OFDM dont le préfixe cyclique permet de supporter des décalages temporels limités. Il ne permet donc pas d'utiliser un autre type de modulation que la modulation OFDM, dont les propriétés d'occupation spectrale et de consommation d'énergie ne sont pas adaptées aux communications satellitaire, et trouve ses limites lorsque les variations de mobilité sont trop importantes. Il n'est donc pas adapté pour une mise en oeuvre dans un contexte de forte mobilité, tel que les communications aéronautiques.

Le programme Européen SESAR (acronyme anglais pour Single European Sky Air traffic management Research) introduit la notion de « concept multi-lien », dans lequel le lien utilisé est sélectionné entre le lien terrestre et le lien satellitaire en fonction d'informations sur la qualité de chaque lien, visant ainsi à augmenter la couverture du système, mais les liens sont considérés comme indépendants, et n'envisagent pas d'hybridation.

La présente invention vise donc à résoudre, lorsque l'aéronef est en contact avec une station terrestre, les problèmes de latence d'un lien de communication satellitaire à destination d'un aéronef liés aux retransmission de messages en proposant un procédé de communication hybride terrestre/satellitaire utilisant chacune des liaisons de communication, et un système de communication associé. L'invention tire parti de ce que le canal de propagation diffère selon qu'il s'agisse du lien terrestre ou du lien satellite, et retransmet par le biais de la station terrestre les données initialement transmises par le biais du satellite.

Le procédé et système peuvent également être utilisés pour des communications à destination d'un véhicule terrestre ou d'un navire, désigné par la suite sous le nom de porteur.

A cet effet, l'invention a pour objet un procédé de réception de données destiné à être mis en oeuvre sur un porteur, ledit porteur faisant partie d'un réseau de télécommunications ayant une composante satellitaire comprenant au moins un satellite, et une composante terrestre comprenant au moins une station terrestre, lesdites données étant organisées en un ensemble de paquets comportant un identifiant, ledit réseau de télécommunications comprenant au moins un dit porteur, ledit procédé étant caractérisé en ce qu'il comporte pour chacun desdits paquets de données les étapes de :

a) réception d'un paquet de données émis par ledit satellite et comportant un identifiant,
b) récupération de l'identifiant et vérification de la bonne réception dudit paquet de données,
c) en cas de mauvaise réception du paquet de données, émission à destination de ladite station terrestre, d'un message de non acquittement comprenant l'identifiant du paquet, et
d) réception d'un paquet de données correspondant audit identifiant émis par la station terrestre.

Selon un mode de réalisation, l'étape d'émission d'un message de non acquittement du procédé est en outre réalisée à destination dudit satellite.

Selon un autre mode de réalisation, le procédé comprend en outre :

b') une étape de mémorisation de l'identifiant d'un paquet de données correctement reçu dans une base de données,
b") en cas de mauvaise réception dudit paquet de données, une étape de recherche dudit identifiant dans ladite base de données, de manière à ne réaliser l'étape d'émission d'un message de non acquittement que lorsque l'identifiant dudit paquet de données reçu n'appartient pas à ladite base de données.

L'invention a également pour objet un procédé d'émission de données destiné à être mis en oeuvre dans une station terrestre faisant partie d'un réseau de télécommunications ayant une composante satellitaire comprenant au moins un satellite, et une composante terrestre comprenant au moins une dite station terrestre, lesdites données étant organisées en un ensemble de paquets comportant un identifiant, ledit réseau de télécommunications comprenant au moins un porteur, ledit procédé étant caractérisé en ce qu'il comporte les étapes de :

A) réception d'un paquet de données comportant un identifiant,
B) récupération de l'identifiant et vérification de la bonne réception dudit paquet de données,
C) en cas de bonne réception dudit paquet de données, mémorisation dudit paquet de données et dudit identifiant dans une base de données,
D) réception d'un message de non acquittement émis par ledit porteur comportant un identifiant de paquet de données,
E) récupération dudit identifiant transmis dans ledit message de non acquittement,
F) récupération, dans ladite base de données, du paquet de données correspondant audit identifiant, et
G) émission, dudit paquet de données récupéré dans ladite base de données.

Selon un mode de réalisation du procédé, ledit paquet de données comportant un identifiant est transmis à la station terrestre par le satellite.

Selon un autre mode de réalisation du procédé, ledit paquet de données comportant un identifiant est transmis à la station terrestre par le biais d'une passerelle d'hybridation faisant un lien entre une passerelle satellite associée audit satellite et ladite station terrestre.

Selon un autre mode de réalisation du procédé, l'étape d'émission, à destination du porteur, dudit message non acquitté est réalisée une pluralité de fois.

Selon un autre mode de réalisation du procédé, l'étape d'émission, à destination du porteur, dudit message non acquitté est réalisée en utilisant un schéma de transmission plus robuste.

L'invention a également pour objet un procédé de transmission de données dans un réseau de télécommunications ayant une composante satellitaire comportant au moins un satellite, et une composante terrestre comportant au moins une station terrestre, lesdites données étant organisées en un ensemble de paquets comportant un identifiant, ledit réseau de télécommunications comprenant au moins un porteur, ledit procédé étant caractérisé en ce qu'il comporte les étapes de :

• émission, depuis ledit satellite, d'un paquet de données comportant un identifiant,
• réception dudit paquet de données par le porteur, selon l'une des revendications 1 à 3,
• émission par ladite station terrestre d'un paquet de données comportant un identifiant en réponse à un message de non acquittement émis par ledit porteur, selon l'une des revendications 4 à 8.

Selon un mode de réalisation du procédé, l'émission d'un paquet de données par la station terrestre en cas de réception d'un message de non acquittement en provenance du porteur est réalisée de manière à ce que le dit paquet soit reçu par le porteur avant la retransmission du message depuis le satellite.

Selon un autre mode de réalisation du procédé, une passerelle satellite transmet les paquets de données audit satellite.

Selon un autre mode de réalisation du procédé, les paquets de données émis à destination du porteur comprennent en outre un identifiant de l'émetteur.

Enfin, l'invention a pour objet un système de transmission de données à destination d'un porteur dans un réseau de télécommunications comprenant une composante satellitaire comprenant au moins un satellite, et une composante terrestre comprenant au moins une station terrestre, lesdites données étant organisées en un ensemble de paquets comportant un identifiant, ledit réseau de télécommunications étant caractérisé en ce qu'il comprend au moins un dit satellite, au moins un dit porteur, et au moins une dite station terrestre, configurés pour mettre en oeuvre au moins l'un des procédés définis précédemment.

Le système de transmission de données comprend donc :

- au moins un satellite configuré pour transmettre des paquets de données à destination d'un porteur, et recevoir des messages de non acquittement depuis le porteur,
- au moins un porteur, configuré pour mettre en oeuvre le procédé de réception de données destiné à être mis en oeuvre sur un porteur,
- au moins une dite station terrestre, configurée pour mettre en oeuvre le procédé d'émission de données destiné à être mis en oeuvre dans une station terrestre.

L'invention sera mieux comprise et d'autres caractéristiques et avantages apparaîtront mieux à la lecture de la description qui suit, donnée à titre non limitatif, et grâce aux figures annexées parmi lesquelles :

- La figure 1 présente un premier mode de réalisation d'un réseau de télécommunications hybride satellitaire/terrestre selon l'invention,
- La figure 2 présente un synoptique de l'enchainement des messages dans le premier mode de réalisation,
- La figure 3 présente un second mode de réalisation d'un réseau de télécommunications hybride satellitaire/terrestre selon l'invention,
- La figure 4 présente un synoptique de l'enchainement des messages dans le second mode de réalisation,
- La figure 5 illustre un exemple de séquencement du procédé selon l'invention mis en oeuvre sur l'aéronef,
- La figure 6 illustre un deuxième exemple de séquencement du procédé selon l'invention mis en oeuvre sur l'aéronef,
- La figure 7 illustre un exemple de séquencement du procédé selon l'invention mis en oeuvre sur une station terrestre,

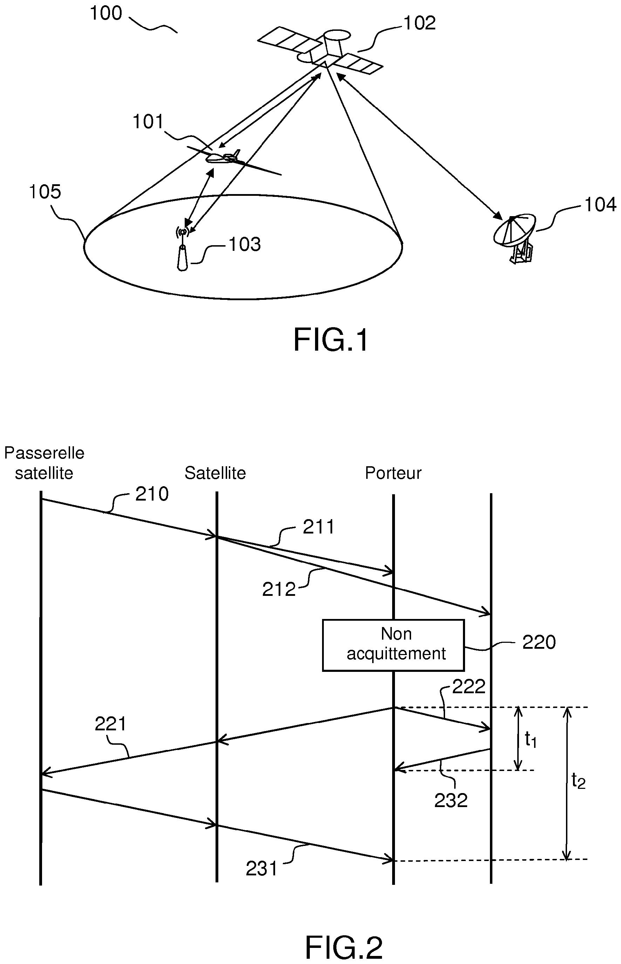

La figure 1 présente un premier mode de réalisation d'un réseau de télécommunications 100 hybride satellitaire/terrestre selon l'invention. Le réseau comprend ici un aéronef 101 destiné à recevoir des données transmises par une passerelle satellite 104 via un satellite 102. Ce mode de réalisation est un mode opportuniste qui vient s'insérer de manière transparente dans une liaison satellitaire utilisant un mode d'accès de type TDMA (terme anglais pour Time Division Multiple Access, ou accès multiple par répartition dans le temps).

Une station terrestre 103 est située dans la zone de couverture 105 d'un satellite 102, dite spot satellitaire, et est en charge de retransmettre à l'aéronef les messages dont la réception n'a pas été réalisée correctement.

La forme d'onde utilisée pour la liaison satellite n'est pas nécessairement identique à celle utilisée par la liaison terrestre. La station terrestre doit être en mesure de recevoir, démoduler et décoder les informations en provenance du satellite et du porteur, le porteur doit être en mesure de recevoir, démoduler et décoder les informations en provenance du satellite et de la station terrestre, mais les liaisons terrestres et satellites peuvent utiliser des formes d'ondes différentes ou des fréquences porteuses différentes.

Les données sont organisées en un ensemble de paquets comportant dans leur entête une information permettant de les identifier. Cet entête est plus protégé contre les erreurs que les données utiles transmises dans lesdits paquets, de manière à pouvoir garantir sa réception dans des conditions pour lesquelles la réception des données utiles n'est pas possible.

Dans le premier mode de réalisation, la liaison terrestre et la liaison satellite ne sont pas reliés par des moyens de communication : la liaison satellite n'a pas connaissance du fait que le porteur est également connecté à une station terrestre. La liaison satellite se fait donc selon son mode de fonctionnement normal.

Lorsqu'un paquet de données doit être transmis au porteur, la passerelle satellite 104 émet ces données à destination du satellite 102 qui les retransmet sur l'ensemble du spot satellitaire 105.

Le porteur et la station terrestre faisant partie du spot satellitaire, ils vont tous deux recevoir le paquet de données, récupérer l'identifiant et vérifier la bonne réception du paquet.

La station terrestre est statique, et peut être équipée d'antennes directives à fort gain. Ainsi, le canal de propagation entre la station terrestre et le satellite s'apparente à un canal de propagation Gaussien, et le bilan de liaison est favorable. Les conditions de réception du paquet de données sont donc bonnes.

Le porteur se déplace, ce qui entraine l'apparition d'effet Doppler venant perturber la réception des données. Dans le cas d'un aéronef, l'utilisation d'antennes non directives (généralement des antennes omni directionnelles ou à ouverture très large), le rend également sensible aux réflexions de l'onde électromagnétique sur le sol, ou sur la carlingue. Ces réflexions entrainent l'apparition de multitrajets générant de l'interférence entre symboles, dégradant la qualité du canal de propagation. Enfin l'aéronef peut être sujet à des phénomènes de masquage selon la position de ses antennes et son orientation.

De ce fait, le paquet de données reçu par l'aéronef peut être fortement dégradé suivant sa position, sa vitesse de déplacement, et son environnement.

Lorsque le porteur 101 n'est pas en mesure de démoduler et décoder correctement un paquet de données, il émet un message de non-acquittement comprenant l'identifiant du paquet mal reçu.

Ce message de non acquittement est reçu par la station terrestre et par la station satellite, qui vont lui répondre en retransmettant le paquet de données non acquitté.

Le protocole d'acquittement dépend du protocole réseau utilisé. Si, par exemple, le protocole utilisé est de type TCP (terme anglais pour Transmission Control Protocol), tous les paquets font l'objet d'un message d'acquittement ou de non acquittement, tandis que si le protocole utilisé est de type NORM (terme anglais pour Negative acknowledgement Oriented Reliable Multicast), les paquets bien reçus ne font pas l'objet d'un message d'acquittement.

La figure 2 présente un synoptique de l'enchainement des messages dans ce premier mode de réalisation.

La passerelle satellite transmet un paquet de données 210 via le satellite, a destination du porteur 211 et de la station terrestre 212.

Lorsque le paquet de données est mal reçu par l'aéronef, celui-ci transmet un message de non acquittement 220.

Ce message de non acquittement va transiter vers la passerelle satellite par l'intermédiaire du satellite 221, la passerelle satellite va l'interpréter et retransmettre ledit paquet mal reçu, via le satellite 231.

Le temps $t_2$ de réponse par la passerelle satellite au message de non acquittement transmis par l'aéronef sera donc, en considérant un satellite géostationnaire (altitude de 35784km) et un aéronef à une hauteur h en km, de :

$$t_2 = \frac{2*(35784-h)+2*35784}{c},$$

c étant la vitesse de la lumière en km/sec.

En considérant que l'altitude de l'aéronef est négligeable par rapport à l'altitude du satellite, le temps $t_2$ de retransmission d'un paquet de données est d'environ 500 millisecondes.

La station terrestre, qui a également reçu et stocké le paquet de données, interprète le message de non acquittement 222 et répond en retransmettant le paquet 232.

La retransmission est faite immédiatement à la réception du message de non acquittement. De cette manière, le message parvient à l'aéronef avant la retransmission faite depuis la passerelle satellite, de manière à ne pas générer de collisions.

Le temps $t_1$ de réponse par la station terrestre est, en prenant les mêmes hypothèses que précédemment, et en considérant Dt la distance entre l'aéronef et la station terrestre exprimée en km, de :

$$t_1 = \frac{2*Dt}{c}.$$

En fonction de la distance $D_t$, le temps $t_1$ de retransmission d'un paquet de données sera de quelques millisecondes.

Le rapport entre t1 et t2, représentant l'amélioration de performances réalisé pour ce mode de réalisation, est de :

$$\frac{t_2}{t_1} = \frac{2*35784-h}{D_t}.$$

Le premier mode de réalisation requiert, au niveau des stations terrestres, la mémorisation des paquets de données correctement reçus en provenance du satellite, afin de pouvoir les retransmettre au porteur si nécessaire. La durée de mémorisation peut par exemple être liée à la taille de la cellule en considérant le temps maximum de propagation nécessaire pour qu'un message de non acquittement lui parvienne, ou au temps maximum de retransmission d'un paquet de données depuis la passerelle satellite.

Une fois cette durée écoulée, la mémoire occupée par le message peut-être libérée.

La station terrestre ne doit pas nécessairement savoir interpréter l'intégralité des protocoles du système satellitaire dans ce mode de réalisation. En effet, il lui suffit d'être en mesure d'extraire les numéros de séquence des paquets de données et des messages de non acquittement reçus. Les autres champs d'entête du protocole ne doivent pas être interprétés.

Avantageusement, les paquets de données comportent, en plus de leur identifiant, un champ de signalisation permettant de connaitre l'origine de l'émission du message.

Ainsi, lorsque le porteur reçoit la retransmission d'un paquet de données depuis la station terrestre et que ce paquet est mal reçu, il est configuré pour ne pas répondre par un message de non acquittement.

De même, le porteur est configuré pour ne pas prendre en compte la retransmission d'un paquet de données depuis la passerelle satellite lorsque celui-ci a été correctement reçu entre temps par le biais de la retransmission depuis la station terrestre.

Avantageusement, et en fonction de l'altitude de l'aéronef, la retransmission d'un paquet de données depuis la station terrestre peut être réalisée une pluralité de fois, le nombre de retransmission étant limité de manière à ce que la dernière retransmission du paquet de données depuis la station terrestre parvienne au porteur avant la retransmission du paquet de données depuis la passerelle satellite.

Avantageusement, la station terrestre peut retransmettre le paquet de données en utilisant un schéma de transmission plus robuste que le schéma de la liaison satellitaire, par exemple en modifiant le taux de codage des données ou le type de modulation de manière à augmenter la marge de résistance de la liaison de données aux erreurs liées aux conditions de propagation.

Les avantages de ce premier mode de réalisation de l'invention sont les suivants :

• Les temps de latence liés à la retransmission d'un paquet de données sont réduits,
• La mise en oeuvre au niveau des stations sol ne nécessite que peu de modifications : elle se limite à la mémorisation des paquets reçus depuis le satellite,
• La mise en oeuvre au niveau des passerelles satellitaires et des satellites ne nécessite pas de modifications,
• La mise en oeuvre au niveau des porteurs ne nécessite que peu de modifications : elle se limite à la gestion des messages d'acquittement/non acquittement,
• La retransmission des paquets de données non acquittés est réalisée systématiquement par la liaison satellitaire, garantissant ainsi l'absence de perte de paquets lorsque le porteur sort de la zone de couverture d'une station terrestre.

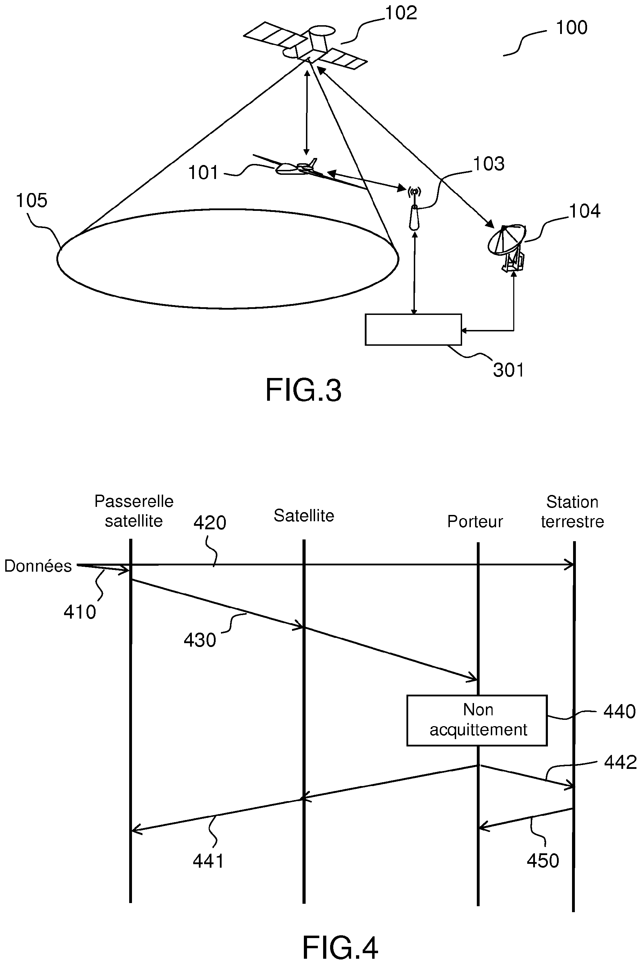

Le second mode de réalisation, représenté en Figure 3, se différencie du premier mode de réalisation en ce que la station terrestre 103 à laquelle est connecté l'aéronef 101 se situe en dehors de la zone de couverture 105 du satellite 102.

Dans ce second mode de réalisation, les données à transmettre sont distribuées à la passerelle satellite 104 et à la station terrestre. Cette distribution peut être réalisée par le biais d'une passerelle d'hybridation 301 faisant le lien entre la passerelle satellite et la station terrestre. Cette passerelle d'hybridation est un point d'entrée des données dans le système. Elle ajoute une information de contrôle aux données afin de permettre une correspondance des numéros de séquence des différents paquets qui transitent sur chacun des liens, et les distribue à la station terrestre et à la passerelle satellite.

Les identifiants des paquets de données peuvent être ajoutés par des protocoles situés à des niveaux supérieurs à celui de la couche MAC (terme anglais pour Media Access Control, ou contrôle d'accès au support). Ainsi, la numérotation des paquets peut différer entre la station terrestre et la passerelle satellite. La passerelle d'hybridation peut donc comprendre un interpréteur destiné à faire le lien entre les identifiants des paquets de données au niveau de la station terrestre et les identifiants des paquets de données au niveau de la passerelle satellite.

Cette passerelle d'hybridation permet également à la passerelle satellite de savoir si le porteur est connecté ou non à une station terrestre.

Le principe de fonctionnement de ce second mode de réalisation est illustré par la figure 4.

Les données à transmettre sont transmises à la passerelle satellite 410, et à la station terrestre 420 par la passerelle d'hybridation 301.

La passerelle satellite envoie 430 un paquet de données au porteur, par le biais du satellite.

Lorsque le porteur n'est pas en mesure de démoduler et de décoder correctement un paquet de données, il envoie un message de non acquittement 440. Suivant le protocole utilisé, il peut également transmettre un message d'acquittement lorsqu'il a correctement reçu un paquet.

Le satellite retransmet 441 ce message de non acquittement à la passerelle satellite. Cette dernière sait, par l'intermédiaire de la passerelle d'hybridation, que le porteur est connecté à une station terrestre, elle ne répond donc pas au message de non acquittement.

La station terrestre reçoit le message de non acquittement 442, et est configurée pour retransmettre le paquet non acquitté 450, en utilisant l'identifiant de paquet contenu dans le message de non acquittement.

Le paquet non acquitté peut être fourni à la station terrestre par la passerelle d'hybridation. Il peut également avoir été fourni au préalable à la station terrestre qui le mémorise, de manière à réduire les temps de latence.

De manière semblable au premier mode de réalisation, la retransmission du message depuis la station terrestre peut être réalisée une pluralité de fois, et peut utiliser un mode de transmission plus robuste.

Dans le second mode de réalisation, si le porteur n'est pas en mesure de recevoir correctement le paquet de données retransmis par la station terrestre, il transmet à nouveau un message de non acquittement.

Les avantages de ce second mode de réalisation de l'invention sont les suivants :

• Les temps de latence liés à la retransmission d'un paquet de données sont réduits,
• L'utilisation de la ressource satellitaire est optimale, la passerelle satellite ne répondant pas aux messages de non acquittement,

- La station terrestre n'est pas soumise à la contrainte géographique de positionnement dans la zone de couverture du satellite, la seule contrainte étant que le porteur se situe dans la zone de couverture du satellite et de la station terrestre,

- Sa mise en oeuvre au niveau des stations sol ne nécessite que peu de modifications : elle se limite à l'établissement d'un lien de communication avec la passerelle satellite et la mémorisation des paquets de données,

- Sa mise en oeuvre au niveau des passerelles satellites ne nécessite que peu de modifications : elle se limite à l'établissement d'un lien de communication avec la station terrestre,

- Sa mise en oeuvre au niveau des satellites ne nécessite pas de modifications,

- Sa mise en oeuvre au niveau des porteurs ne nécessite pas de modifications,

- La station terrestre et la passerelle satellite échangent des informations indiquant si le porteur est relié ou non à la station terrestre. Lorsque le porteur sort de la zone de couverture de la station terrestre, la passerelle satellite répond aux messages de non acquittement, garantissant ainsi l'absence de perte de paquets de données.

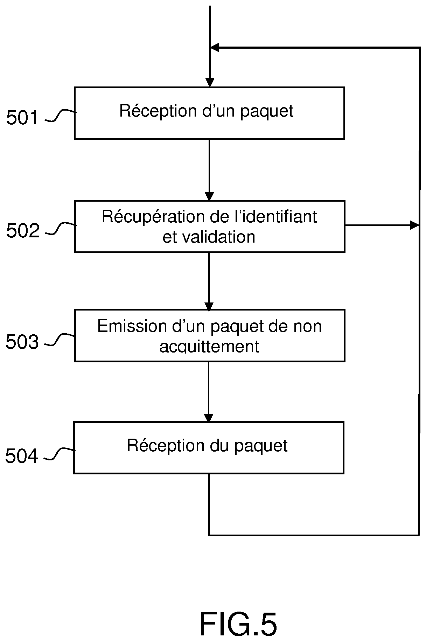

La figure 5 présente un exemple de séquencement du procédé selon l'invention mis en oeuvre sur le porteur.

Lorsque le porteur reçoit un paquet de données 501 transmis depuis une passerelle satellite via un satellite, il procède à une étape 502 de récupération de l'identifiant contenu dans ce paquet de données, et de validation de la bonne réception du paquet.

Cette validation de la bonne réception dépend du standard utilisé pour la transmission des données, et peut prendre plusieurs formes différentes, comme par exemple le calcul d'un motif de CRC (Contrôle de Redondance Cyclique) au niveau de la couche Physique ou de la couche MAC.

Si le paquet a été correctement reçu, alors le porteur se met en attente d'un nouveau paquet de données de la part de la passerelle satellite, ou émet un message d'acquittement si le protocole utilisé le nécessite.

Si le paquet n'a pas été correctement reçu, alors le porteur réalise une étape d'émission d'un message de non-acquittement 503 contenant l'identifiant du paquet de données, puis attend la retransmission du paquet de données depuis la station terrestre 504.

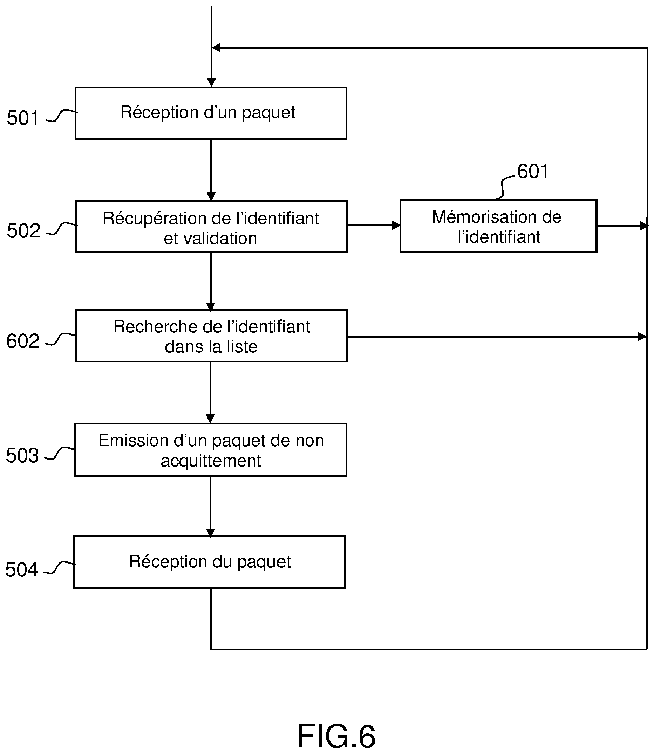

La figure 6 présente un exemple de séquencement du procédé selon l'invention mis en oeuvre sur le porteur lorsque le mode de réalisation correspond au premier mode de réalisation, présenté en Figure 1.

En plus des étapes présentées en figure 5, lorsqu'il reçoit correctement un paquet de donnée, le porteur réalise une étape 601 de mémorisation de l'identifiant dans une base de données, une liste, ou tout autre mécanisme approprié.

Si le message n'a pas été reçu correctement, alors le porteur va rechercher l'identifiant dans la base de données 602 avant de prendre la décision d'émettre ou non un message de non acquittement.

Si le message appartient à la base de données, c'est qu'il a été correctement reçu au préalable. Ce cas de figure se produit lors de la réception d'un paquet de données depuis le satellite en réponse à un message de non acquittement, le message ayant été retransmis entre temps par la station terrestre.

Dans ce cas de figure, le porteur n'émet pas de message de non acquittement, et retourne à l'état d'attente d'un paquet de données.

Si le message appartient à la base de données, le porteur va emettre un message de non acquittement 503 avant de recevoir la retransmission du paquet 504 depuis la station terrestre.

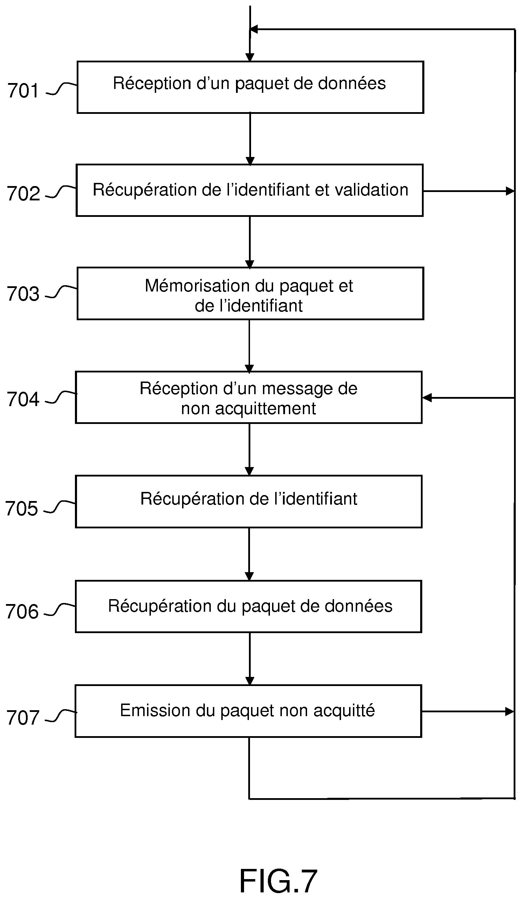

La figure 7 présente un exemple de séquencement du procédé selon l'invention mis en oeuvre sur une station terrestre.

Suivant la configuration du réseau, la station terrestre peut recevoir les paquets de données à retransmettre un par un (cas du premier mode de réalisation) ou par groupe (cas du second mode de réalisation dans lequel les paquets de données sont transmis groupés à la station terrestre et à la passerelle satellite).

A la suite de la réception 701 d'un paquet de données, la station terrestre récupère 702 l'identifiant du paquet, et valide la bonne réception. Si le paquet est mal reçu, alors la station terrestre retourne à l'état d'attente d'un nouveau paquet. S'il est bien reçu, le paquet de données et l'identifiant associé sont mémorisés 703 pour une durée de préférence supérieure au temps maximum de réception d'un message de non acquittement.

La mémorisation du paquet de données peut indifféremment se faire dans une base de données, ou en utilisant la mémoire du matériel sur lequel le procédé est implémenté.

Le message reçu peut avoir pour origine un satellite lorsque la station terrestre appartient au spot satellitaire, comme dans le premier mode de réalisation, ou une passerelle d'hybridation permettant de partager les données entre la passerelle satellite et la station terrestre, comme dans le second mode de réalisation.

Si les données sont transmises de manière groupée, la station terrestre peut réitérer les étapes 701, 702 et 703 avant de passer à l'étape 704 de réception d'un message de non acquittement.

Lorsque la station terrestre reçoit un message de non acquittement 704 transmis par le porteur, celle-ci réalise une étape 705 de récupération de l'identifiant transmis, puis de récupération du paquet de données 706 correspondant à l'identifiant dans les données mémorisées.

Si le paquet n'est pas en mémoire, alors la station terrestre retourne à l'état d'attente d'un nouveau paquet de données ou message de non acquittement.

Si le paquet est en mémoire, alors la station terrestre le transmet 707 à destination du porteur.

L'ensemble des procédés ont pour vocation à être exécuté sur n'importe quel support d'un équipement de télécommunication, comme par exemple un processeur, un DSP (terme anglais pour Digital Signal Processor, ou processeur de signal numérique), un FPGA (terme anglais pour Field Programmable Gâte Array, ou réseau de portes programmables), ou un ASIC (terme anglais pour Application-Specific Integrated Circuit, ou circuit intégré à application spécifique).

## Revendications

1. Procédé de réception de données destiné à être mis en oeuvre sur un porteur (101), ledit porteur faisant partie d'un réseau de télécommunications (100) ayant une composante satellitaire comprenant au moins un satellite (102), et une composante terrestre comprenant au moins une station terrestre (103), lesdites données étant organisées en un ensemble de paquets comportant un identifiant, ledit réseau de télécommunications comprenant au moins un dit porteur, ledit procédé comportant pour chacun desdits paquets de données les étapes de :

   a) réception d'un paquet de données (501) émis par ledit satellite et comportant un identifiant,
   b) récupération de l'identifiant et vérification de la bonne réception (502) dudit paquet de données,
   c) en cas de mauvaise réception du paquet de données, émission à destination de ladite station terrestre, d'un message de non acquittement comprenant l'identifiant du paquet (503), et
   d) réception d'un paquet de données correspondant audit identifiant (504) émis par la station terrestre.

2. Procédé selon la revendication 1 dans laquelle l'étape (503) d'émission d'un message de non acquittement est en outre réalisée à destination dudit satellite.

3. Procédé selon l'une des revendications 1 et 2 comprenant en outre :

   b') une étape de mémorisation de l'identifiant d'un paquet de données correctement reçu dans une base de données (601),
   b") en cas de mauvaise réception dudit paquet de données, une étape de recherche dudit identifiant dans ladite base de données (602), de manière à ne réaliser l'étape d'émission d'un message de non acquittement que lorsque l'identifiant dudit paquet de données reçu n'appartient pas à ladite base de données.

4. Procédé d'émission de données destiné à être mis en oeuvre dans une station terrestre faisant partie d'un réseau de télécommunications ayant une composante satellitaire comprenant au moins un satellite, et une composante terrestre comprenant au moins une dite station terrestre, lesdites données étant organisées en un ensemble de paquets comportant un identifiant, ledit réseau de télécommunications comprenant au moins un porteur, ledit procédé étant **caractérisé en ce qu'**il comporte les étapes de :

   A) réception d'un paquet de données (701) comportant un identifiant,
   B) récupération de l'identifiant et vérification de la bonne réception (702) dudit paquet de données,
   C) en cas de bonne réception dudit paquet de données, mémorisation dudit paquet de données et dudit identifiant (703) dans une base de données,
   D) réception d'un message de non acquittement (704) émis par ledit porteur comportant un identifiant de paquet de données,
   E) récupération dudit identifiant transmis dans ledit message de non acquittement (705),
   F) récupération (706), dans ladite base de données, du paquet de données correspondant audit identifiant, et
   G) émission, dudit paquet de données récupéré dans ladite base de données (707).

5. Procédé selon la revendication 4, dans lequel ledit paquet de données comportant un identifiant est transmis à la station terrestre par le satellite.

6. Procédé selon la revendication 4, dans lequel ledit paquet de données comportant un identifiant est transmis à la station terrestre par le biais d'une passerelle d'hybridation (301) faisant un lien entre une passerelle satellite (104) associée audit satellite et ladite station terrestre (103).

7. Procédé selon les revendications 4 à 6 dans lequel l'étape d'émission, à destination du porteur, dudit message non acquitté est réalisée une pluralité de fois.

8. Procédé selon les revendications 4 à 7 dans lequel l'étape d'émission, à destination du porteur, dudit message non acquitté est réalisée en utilisant un schéma de transmission plus robuste.

9. Procédé de transmission de données dans un réseau de télécommunications (100) ayant une composante satellitaire comportant au moins un satellite (102), et une composante terrestre comportant au moins une station terrestre (103), lesdites données étant organisées en un ensemble de paquets comportant un identifiant, ledit réseau de télécommunications comprenant au moins un porteur (101), ledit procédé étant **caractérisé en ce qu'**il comporte les étapes de :

• émission, depuis ledit satellite, d'un paquet de données comportant un identifiant,
• réception dudit paquet de données par le porteur, selon l'une des revendications 1 à 3,
• émission par ladite station terrestre d'un paquet de données comportant un identifiant en réponse à un message de non acquittement émis par ledit porteur, selon l'une des revendications 4 à 8.

10. Procédé selon la revendication 9 dans lequel l'émission d'un paquet de données par la station terrestre en cas de réception d'un message de non acquittement en provenance du porteur est réalisée de manière à ce que le dit paquet soit reçu par le porteur avant la retransmission du message depuis le satellite.

11. Procédé selon l'une des revendications précédentes dans lequel une passerelle satellite (104) transmet les paquets de données audit satellite (102).

12. Procédé selon l'une des revendications précédentes dans lequel les paquets de données émis à destination du porteur comprennent en outre un identifiant de l'émetteur.

13. Système de transmission de données à destination d'un porteur (101) dans un réseau de télécommunications (100) comprenant une composante satellitaire comprenant au moins un satellite (102), et une composante terrestre comprenant au moins une station terrestre (103), lesdites données étant organisées en un ensemble de paquets comportant un identifiant, ledit réseau de télécommunications étant **caractérisé en ce qu'**il comprend au moins un dit satellite, au moins un dit porteur, et au moins une dite station terrestre, configurés pour mettre en oeuvre le procédé selon l'une des revendications 9 à 12.

**Patentansprüche**

1. Verfahren zum Empfangen von Daten, bestimmt zur Implementation auf einem Träger (101), wobei der Träger Teil eines Telekommunikationsnetzwerks (100) mit einer wenigstens einen Satelliten (102) umfassenden Satellitenkomponente und einer wenigstens eine terrestrische Station (103) umfassenden terrestrischen Komponente ist, wobei die Daten zu einer Gruppe von Paketen umfassend einen Identifikator organisiert sind, wobei das Telekommunikationsnetzwerk wenigstens einen Träger umfasst, wobei das Verfahren für jedes der Datenpakete die folgenden Schritte beinhaltet:

a) Empfangen eines Datenpakets (501), das von dem Satelliten ausgesendet wurde und einen Identifikator umfasst,
b) Wiederherstellen des Identifikators und Verifizieren des guten Empfangs (502) des Datenpakets,
c) Aussenden, im Falle eines schlechten Empfangs des Datenpakets, einer den Identifikator des Pakets (503) umfassenden Nicht-Quittierungsnachricht zu der terrestrischen Station, und
d) Empfangen eines Datenpakets entsprechend dem von der terrestrischen Station ausgesendeten Identifikator (504).

2. Verfahren nach Anspruch 1, bei dem der Schritt (503) des Aussendens einer Nicht-Quittierungsnachricht ferner zu dem Satelliten ausgeführt wird.

3. Verfahren nach einem der Ansprüche 1 und 2, das ferner Folgendes beinhaltet:

b') einen Schritt des Speicherns des Identifikators eines korrekt empfangenen Datenpakets in einer Datenbank (601),
b") einen Schritt des Suchens, im Falle des schlechten Empfangs des Datenpakets, des Identifikators in der Datenbank (602), um den Schritt des Aussendens einer Nicht-Quittierungsnachricht nur dann zu realisieren, wenn der Identifikator des empfangenen Datenpakets nicht zu der Datenbank gehört.

4. Verfahren zum Aussenden von Daten, bestimmt zur Implementation in einer terrestrischen Station, die Teil eines Telekommunikationsnetzes mit einer wenigstens einen Satelliten umfassenden Satellitenkomponente und einer wenigstens eine terrestrische Station umfassenden terrestrischen Komponente ist, wobei die Daten zu einer Gruppe von Paketen umfassend einen Identifikator organisiert sind, wobei das Telekommunikationsnetz wenigstens einen Träger umfasst, wobei das Verfahren **dadurch gekennzeichnet ist, dass** es die folgenden Schritte beinhaltet:

A) Empfangen eines einen Identifikator umfassenden Datenpakets (701),
B) Wiederherstellen des Identifikators und Verifizieren des guten Empfangs (702) des Datenpakets,

C) Speichern, im Falle eines guten Empfangs des Datenpakets, des Datenpakets und des Identifikators (703) in einer Datenbank,

D) Empfangen einer von dem Träger ausgesendeten Nicht-Quittierungsnachricht (705), die einen Identifikator des Datenpakets umfasst,

E) Wiederherstellen des Identifikators, der in der Nicht-Quittierungsnachricht (705) gesendet wurde,

F) Wiederherstellen (706), in der Datenbank, des Datenpakets entsprechend dem Identifikator, und

G) Aussenden des aus der Datenbank (707) abgerufenen Datenpakets.

5.  Verfahren nach Anspruch 4, bei dem das einen Identifikator umfassende Datenpaket von dem Satelliten zu der terrestrischen Station gesendet wird.

6.  Verfahren nach Anspruch 4, bei dem das einen Identifikator umfassende Datenpaket mittels eines Hybridisierungs-Gateway (301) zu der terrestrischen Station gesendet wird, das eine Verbindung zwischen einem mit dem Satelliten assoziierten Satelliten-Gateway (104) und der terrestrischen Station (103) bildet.

7.  Verfahren nach den Ansprüchen 4 bis 6, bei dem der Schritt des Aussendens der Nicht-Quittierungsnachricht zum Träger mehrere Male realisiert wird.

8.  Verfahren nach den Ansprüchen 4 bis 7, bei dem der Schritt des Aussendens der Nicht-Quittierungsnachricht zum Träger mittels eines robusteren Sendeschemas realisiert wird.

9.  Verfahren zum Senden von Daten in einem Telekommunikationsnetz (100) mit einer wenigstens einen Satelliten (102) umfassenden Satellitenkomponente und einer wenigstens eine terrestrische Station (103) umfassenden terrestrischen Komponente, wobei die Daten zu einer Gruppe von Paketen umfassend einen Identifikator organisiert sind, wobei das Telekommunikationsnetz wenigstens einen Träger (101) umfasst, wobei das Verfahren **dadurch gekennzeichnet ist, dass** es die folgenden Schritte beinhaltet:

• Aussenden, von dem Satelliten, eines einen Identifikator umfassenden Datenpakets,
• Empfangen des Datenpakets durch den Träger nach einem der Ansprüche 1 bis 3,
• Aussenden, durch die terrestrische Station, eines einen Identifikator umfassenden Datenpakets als Reaktion auf eine von dem Träger ausgesendete Nicht-Quittierungsnachricht nach einem der Ansprüche 4 bis 8.

10. Verfahren nach Anspruch 9, bei dem das Aussenden eines Datenpakets durch die terrestrische Station im Falle des Empfangs einer vom Träger kommenden Nicht-Quittierungsnachricht auf eine solche Weise realisiert wird, dass das Paket von dem Träger vor dem Neusenden der Nachricht vom Satelliten empfangen wird.

11. Verfahren nach einem der vorherigen Ansprüche, bei dem ein Satelliten-Gateway (104) die Datenpakete zum Satelliten (102) sendet.

12. Verfahren nach einem der vorherigen Ansprüche, bei dem die zum Träger ausgesendeten Datenpakete ferner einen Identifikator des Senders umfassen.

13. System zum Senden von Daten zu einem Träger (101) in einem Telekommunikationsnetzwerk (100), das eine wenigstens einen Satelliten (102) umfassende Satellitenkomponente und eine wenigstens eine terrestrische Station (103) umfassende terrestrische Komponente umfasst, wobei die Daten zu einer Gruppe von Paketen umfassend einen Identifikator organisiert sind, wobei das Telekommunikationsnetzwerk **dadurch gekennzeichnet ist, dass** es wenigstens einen Satelliten, wenigstens einen Träger und wenigstens eine terrestrische Station umfasst, konfiguriert zum Durchführen des Verfahrens nach einem der Ansprüche 9 bis 12.

**Claims**

1.  Method for receiving data that is intended to be implemented on a bearer (101), said bearer forming part of a telecommunication network (100) having a satellite component comprising at least one satellite (102), and a terrestrial component comprising at least one terrestrial station (103), said data being organized into a set of packets having an identifier, said telecommunication network comprising at least one said bearer, said method having, for each of said data packets, the steps of:

a) reception of a data packet (501) transmitted by said satellite and having an identifier,
b) recovery of the identifier and verification of correct reception (502) of said data packet,
c) in the event of incorrect reception of the data packet, transmission of a negative acknowledgement message comprising the identifier of the packet (503) to said terrestrial station, and
d) reception of a data packet corresponding to said identifier (504) that is transmitted by the terrestrial station.

2.  Method according to claim 1, in which the step (503) of transmission of a negative acknowledgement message is moreover carried out to said satellite.

3. Method according to one of claims 1 and 2, moreover comprising:

b') a step of memory storage of the identifier of a correctly received data packet in a database (601),
b") in the event of incorrect reception of said data packet, a step of searching for said identifier in said database (602), so as to carry out the step of transmission of a negative acknowledgement message only when the identifier of said received data packet does not belong to said database.

4. Method for transmitting data that is intended to be implemented in a terrestrial station forming part of a telecommunication network having a satellite component comprising at least one satellite, and a terrestrial component comprising at least one said terrestrial station, said data being organized into a set of packets having an identifier, said telecommunication network comprising at least one bearer, said method being **characterized in that** it has the steps of:

A) reception of a data packet (701) having an identifier,
B) recovery of the identifier and verification of correct reception (702) of said data packet,
C) in the event of correct reception of said data packet, memory storage of said data packet and of said identifier (703) in a database,
D) reception of a negative acknowledgement message (704) transmitted by said bearer having a data packet identifier,
E) recovery of said identifier transmitted in said negative acknowledgement message (705),
F) recovery (706), from said database, of the data packet corresponding to said identifier, and
G) transmission of said data packet recovered from said database (707).

5. Method according to claim 4, in which said data packet having an identifier is transmitted to the terrestrial station by the satellite.

6. Method according to claim 4, in which said data packet having an identifier is transmitted to the terrestrial station by means of a hybridization gateway (301) forming a link between a satellite gateway (104) associated with said satellite and said terrestrial station (103).

7. Method according to claims 4 to 6, in which the step of transmission of said negatively acknowledged message to the bearer is carried out a plurality of times.

8. Method according to claims 4 to 7, in which the step of transmission of said negatively acknowledged message to the bearer is carried out using a more robust schema of transmission.

9. Method for transmitting data in a telecommunication network (100) having a satellite component having at least one satellite (102), and a terrestrial component having at least one terrestrial station (103), said data being organized into a set of packets having an identifier, said telecommunication network comprising at least one bearer (101), said method being **characterized in that** it has the steps of:

• transmission of a data packet having an identifier from said satellite,
• reception of said data packet by the bearer, according to one of claims 1 to 3,
• transmission of a data packet having an identifier by said terrestrial station in response to a negative acknowledgement message transmitted by said bearer, according to one of claims 4 to 8.

10. Method according to claim 9, in which the transmission of a data packet by the terrestrial station in the event of reception of a negative acknowledgement message arriving from the bearer is carried out so that said packet is received by the bearer before retransmission of the message from the satellite.

11. Method according to one of the preceding claims, in which a satellite gateway (104) transmits the data packets to said satellite (102).

12. Method according to one of the preceding claims, in which the data packets transmitted to the bearer moreover comprise an identifier for the transmitter.

13. System for transmitting data to a bearer (101) in a telecommunication network (100) comprising a satellite component comprising at least one satellite (102), and a terrestrial component comprising at least one terrestrial station (103), said data being organized into a set of packets having an identifier, said telecommunication network being **characterized in that** it comprises at least one said satellite, at least one said bearer and at least one said terrestrial station, which are configured to implement the method according to one of claims 9 to 12.

FIG.1

FIG.2

FIG.3

FIG.4

501 — Réception d'un paquet

502 — Récupération de l'identifiant et validation

503 — Emission d'un paquet de non acquittement

504 — Réception du paquet

FIG.5

501 — Réception d'un paquet

502 — Récupération de l'identifiant et validation

601 — Mémorisation de l'identifiant

602 — Recherche de l'identifiant dans la liste

503 — Emission d'un paquet de non acquittement

504 — Réception du paquet

# FIG.6

701 — Réception d'un paquet de données

702 — Récupération de l'identifiant et validation

703 — Mémorisation du paquet et de l'identifiant

704 — Réception d'un message de non acquittement

705 — Récupération de l'identifiant

706 — Récupération du paquet de données

707 — Emission du paquet non acquitté

# FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0105064 A1